# EUROPEAN PATENT APPLICATION

(11) **EP 1 264 568 A1**
(43) Date of publication of application: **11.12.2002**
(21) Application number: 02253736.9
(22) Date of filing: 28.05.2002
(51) Int. Cl.: A47J 31/36

(54) **Beverage extracting apparatus**

(30) Priority: 04.06.2001 JP 2001167716
(71) Applicant: Sanden Corporation, Isesaki-shi, Gunma 372-8502 (JP)
(72) Inventor: Nagasawa, Takashi, Sanden Corporation, Isesaki-shi, Gunma 372-8502 (JP); Matsuo, Takao, Sanden Corporation, Isesaki-shi, Gunma 372-8502 (JP)
(74) Representative: Haley, Stephen

(57) **Abstract**

The present invention relates to a beverage extracting apparatus for a vending machine, which is capable of extracting both foamy beverage and less foamy beverage using one apparatus. End faces of an upper piston (2) and a lower piston (3) are provided with flow holes (2a,3a) having different flow resistance, and there are provided a first flow path for causing hot water and the beverage to flow from the upper piston to the lower piston and a second flow path for causing hot water and the beverage to flow in the opposite direction so as to be capable of being switched over. Therefore, by switching over the flow paths, either beverage of espresso coffee and regular coffee can be extracted by using one extracting apparatus.

## Description

The present invention relates to a beverage extracting apparatus for a vending machine in which a beverage is extracted from a raw material such as coffee powder and is poured into a cup, whereby the beverage is sold.

Conventionally, as a beverage extracting apparatus of this kind, there is known an apparatus having an extracting cylinder whose upper and lower ends are open, and upper and lower pistons inserted to the upper and lower end sides of the extracting cylinder, in which a raw material is interposed between the pistons inserted in the extracting cylinder, hot water is discharged from the end face of the upper piston to the raw material, and beverage extracted from the raw material is caused to flow out through the end face of the lower piston, as described, for example, in Japanese Patent Publication No. 50-38994 specification.

In the above-described beverage extracting apparatus, an interior of the extracting cylinder can be closed and be under a high pressure by the pistons inserted in the extracting cylinder, so that this apparatus is suited to a foamy beverage extracted under a high pressure, such as espresso coffee.

However, such a structure is unsuited to a less foamy beverage extracted under a low pressure, such as regular coffee, so that the apparatus cannot extract both espresso coffee and regular coffee.

Also, in the above-described beverage extracting apparatus, although a plurality of holes for causing the hot water or the beverage to flow are provided in an end face of each of the pistons, raw material grounds adhere to the end face of the piston on a beverage suction side. Therefore, periodical cleaning becomes necessary to prevent clogging. In this case, if a cleaning operation is selected, hot water is discharged from one piston in the state in which a raw material is not supplied to between the pistons, and thus raw material grounds adhering to the end face of the other piston is washed away.

However, since holes for flowing out the beverage are formed so as to have a small size because the holes are used to filter the beverage, raw material grounds larger than this hole sometimes remain, which poses a problem in that the raw material grounds cannot be removed completely by cleaning.

The present invention has been achieved to solve the above problems, and accordingly an object thereof is to provide a beverage extracting apparatus, which is capable of extracting both a foamy beverage extracted under a high pressure and a less foamy beverage extracted under a low pressure using one apparatus. Also, another object of the present invention is to provide a beverage extracting apparatus capable of surely removing raw material grounds from end faces of pistons at the time of cleaning.

To attain the above objects, flow holes for hot water or beverage provided in the end face of each of the pistons are formed so as to have large flow resistance for one piston and have small flow resistance for the other piston, and the beverage extracting apparatus includes a first flow path for discharging hot water from one piston whose flow holes have large flow resistance to a portion between the pistons and causing a beverage to flow out of the other piston whose flow holes have small flow resistance when a predetermined kind of beverage is extracted; a second flow path for discharging hot water from the other piston whose flow holes have small flow resistance to the portion between the pistons and causing the beverage to flow out of one piston whose flow holes have large flow resistance when another kind of beverage is extracted; and flow path switching means for switching over the flow paths.

Thereby, when the predetermined kind of beverage is extracted, hot water is discharged from one piston whose flow holes have large flow resistance and the raw material is caused to flow out of the other piston whose flow holes have small flow resistance by the first flow path. Therefore, the pressure between the pistons at the time of extraction is high, so that beverage containing much foam is extracted. Also, when another kind of beverage is extracted, hot water is discharged from the other piston whose flow holes have small flow resistance and the beverage is caused to flow out of one piston whose flow holes have large flow resistance by the second flow path. Therefore, the pressure between the pistons at the time of extraction is low, so that a beverage containing less foam is extracted.

Thereupon, either beverage of foamy beverage (for example, espresso coffee) and less foamy beverage (for example, regular coffee) can be extracted by using one extracting apparatus, which is very advantageous to a beverage vending machine which is required to sell many kinds of beverages.

Also, in the present invention, flow holes for hot water or beverage provided in the end face of each of the pistons are formed so as to have a large opening for one piston and have a small opening for the other piston, and the beverage extracting apparatus includes a first flow path for discharging hot water from one piston whose flow holes have a large opening to the portion between the pistons and causing the beverage to flow out of the other piston whose flow holes have a small opening when a beverage is extracted; a second flow path for discharging hot water from the other piston whose flow holes have a small opening to the portion between the pistons and causing the hot water to flow out of one piston whose flow holes have a large opening when the portion between the pistons is cleaned; and flow path switching means for switching over the flow paths.

Thereby, when the beverage is extracted, hot water is discharged from one piston whose flow holes have a large opening and the beverage is caused to flow out of the other piston whose flow holes have a small opening by the first flow path. Also, when the portion between the pistons is cleaned, hot water is discharged from the other piston whose flow holes have a small opening and the hot water is caused to flow out of one piston whose flow holes have a large opening by the second flow path. Therefore, even raw material grounds remaining without passing through the flow holes in the piston having a small opening flow out passing through the flow holes in the piston having a large opening.

Thereupon, raw material grounds can be discharged surely at the time of cleaning, so that the occurrence of clogging due to the remaining raw material grounds can be prevented surely.

### In the Drawings;

FIG. 1 is a schematic view of a beverage extracting apparatus in accordance with a first embodiment of the present invention;
FIG. 2 is a schematic view of a beverage extracting apparatus;
FIG. 3A and 3B are explanatory views illustrating an operation of a beverage extracting apparatus;
FIG. 4A and 4B are explanatory views illustrating the operation of the beverage extracting apparatus;
FIG. 5 is a schematic view of a beverage extracting apparatus in accordance with a second embodiment of the present invention;
FIG. 6 is the schematic view of the beverage extracting apparatus; and
FIG. 7 is a schematic view of a beverage extracting apparatus in accordance with a third embodiment of the present invention.

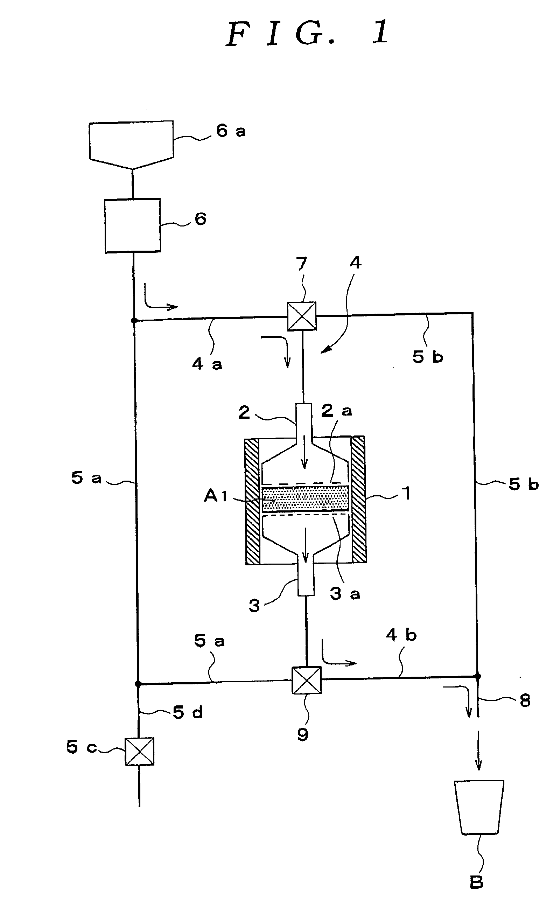

FIGS. 1 to 4 show a first embodiment of the present invention.

A beverage extracting apparatus shown in these drawings, which extracts beverage from a raw material A1 such as coffee powder, includes an extracting cylinder 1 whose upper and lower ends are open, an upper piston 2 inserted from an upside into the extracting cylinder 1, a lower piston 3 inserted from a downside into the extracting cylinder 1, a first flow path 4 for discharging hot water from the upper piston 2 side to the lower piston 3 side, a second flow path 5 for discharging hot water from the lower piston 3 side to the upper piston 2 side, and a pump 6 for delivering hot water into the flow paths 4 and 5.

The extracting cylinder 1, which is formed into a cylindrical shape extending vertically, is arranged at a predetermined position in a vertical direction of an apparatus body, not shown.

The upper piston 2 is configured so as to be moved vertically by a driving mechanism, not shown, and the interior thereof is formed into a hollow shape so that hot water or extracted beverage can flow therethrough. The lower end face of the upper piston 2 is formed with many flow holes 2a through which hot water or extracted beverage flows, and each of the flow holes 2a is formed so as to be larger than a flow hole 3a in the lower piston 3.

The lower piston 3 is configured so as to be moved vertically by a driving mechanism, not shown, and an interior thereof is formed into a hollow shape so that hot water or an extracted beverage can flow therethrough. An upper end face of the lower piston 3 is formed by many flow holes 3a through which hot water or extracted beverage flows, and each of the flow holes 3a is formed so as to be smaller than the flow hole 2a in the lower piston 2. Specifically, the flow holes 3a in the lower piston 3 are formed so as to have large flow resistance as a whole as compared with the flow holes 2a in the upper piston 2.

The first flow path 4 is made up of an upstream-side pipe 4a for connecting the upper piston 2 to the pump 6 via a first three-way valve 7, and a downstream-side pipe 4b for connecting the lower piston 3 to a beverage discharge pipe 8 via a second three-way valve 9.

The second flow path 5 is made up of an upstream-side pipe 5a for connecting the lower piston 3 to the pump 6 via the second three-way valve 9, and a downstream-side pipe 5b for connecting the upper piston 2 to the beverage discharge pipe 8 via the first three-way valve 7. The upstream-side pipe 5a is connected with a discharge pipe 5d having a regulating valve 5c. The discharge pipe 5d is normally closed by the regulating valve 5c.

The pump 6, which has a publicly known construction of, for example, an electromagnetic pump, is configured so as to discharge hot water stored in a tank 6a disposed above the pump 6 to the flow paths 4 and 5. The tank 6a may be installed on a downstream side of the pump 6.

The above-described beverage extracting apparatus is mounted in a beverage vending machine that sells espresso coffee and regular coffee. When espresso coffee is selected, beverage is extracted by means of the first flow path 4, and when regular coffee is selected, the beverage is extracted by means of the second flow path 5.

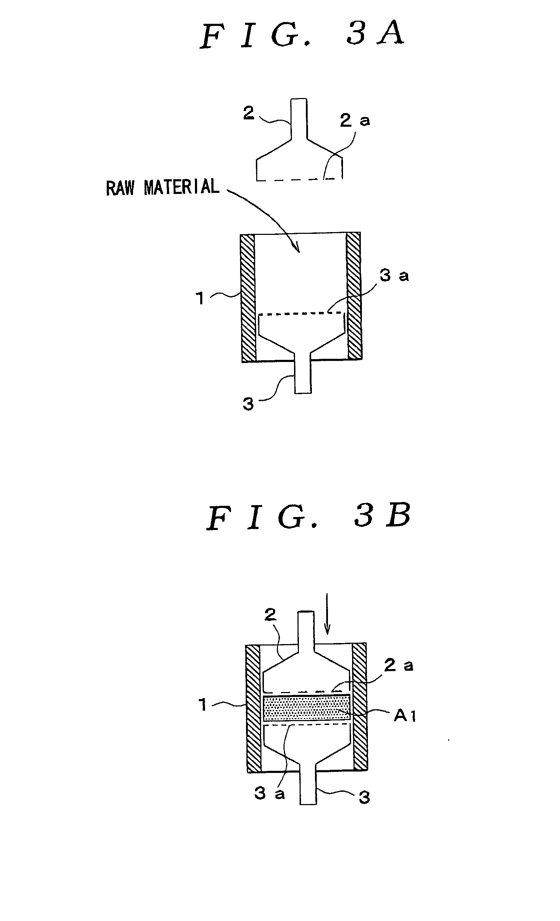

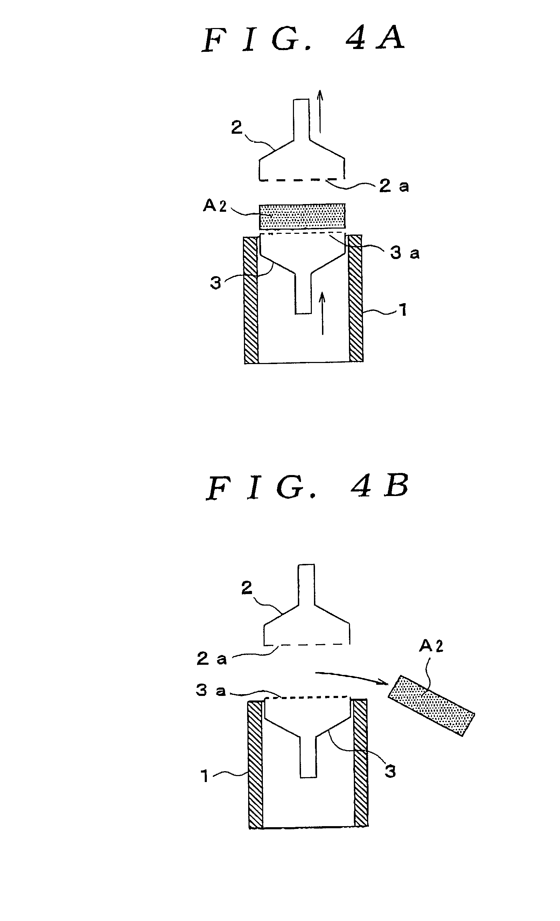

In the beverage extracting apparatus configured as described above, after coffee powder (milled beans) is charged as a raw material into the extracting cylinder 1 in which the lower piston 3 is inserted as shown in FIG. 3A, the upper piston 2 is inserted into the extracting cylinder 1 as shown in FIG. 3B. At this time, hot water is discharged from one of the pistons 2 and 3 to the raw material A1. Thus, beverage extracted from the raw material A flows out of the other of the pistons 2 and 3, and is poured into a cup B through the beverage discharge pipe 8. Next, after the extraction of the beverage is finished, the pistons 2 and 3 are moved to a position above the extracting cylinder 1 as shown in FIG. 4A, and raw material grounds A2 on the lower piston 3 are discharged as shown in FIG. 4B.

At the time of the above-described beverage extraction, in the case where espresso coffee is selected, the pump 6 and the upper piston 2 are connected to each other by the first three-way valve 7, and the lower piston 3 and the beverage discharge pipe 8 are connected to each other by the second three-way valve 9 (first flow path 4). Thus, as shown in FIG. 1, hot water is discharged from the upper piston 2, and an extracted beverage flows out of the lower piston 3. In this case, since the flow holes 3a in the lower piston 3 have larger flow resistance than the flow holes 2a in the upper piston 2, the pressure between the pistons 2 and 3 at the time of extraction is high, and thus beverage (espresso coffee) containing much fine foam is extracted.

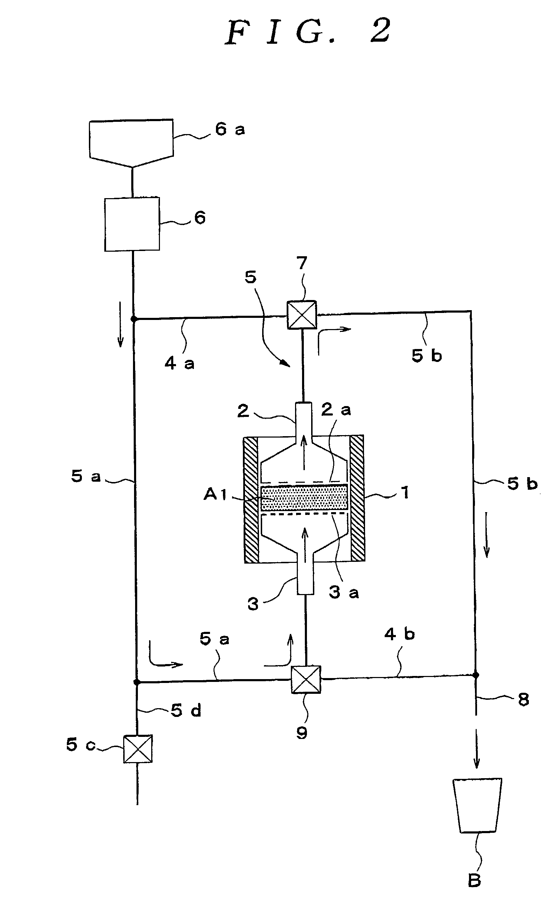

In the case where regular coffee is selected, the pump 6 and the lower piston 3 are connected to each other by the second three-way valve 9, and the upper piston 2 and the beverage discharge pipe 8 are connected to each other by the first three-way valve 7 (the second flow path 5). Thus, as shown in FIG. 2, hot water is discharged from the lower piston 3, and extracted beverage flows out of the upper piston 2. In this case, since the flow holes 2a in the upper piston 2 have smaller flow resistance than the flow holes 3a in the lower piston 3, the pressure between the pistons 2 and 3 at the time of extraction is low, and thus the beverage (regular coffee) containing less foam than the aforementioned espresso coffee is extracted.

As described above, according to the beverage extracting apparatus of this embodiment, the flow holes 2a and 3a having different flow resistance are provided in end faces of the upper piston 2 and the lower piston 3, and the first flow path 4 for causing hot water and beverage to flow from the upper piston 2 to the lower piston 3 and the second flow path 5 for causing hot water and a beverage to flow in the opposite direction are provided so as to be capable of being switched over. Therefore, by switching over the flow paths 4 and 5 to each other, either beverage of espresso coffee and regular coffee can be extracted by using one extracting apparatus, which is very advantageous to a beverage vending machine which is required to sell many kinds of beverages.

Although the flow resistance of the flow holes 2a and 3a is made different by the difference in size of the holes in the above-described embodiment, the flow resistance thereof can be made different by the difference in the number of the holes.

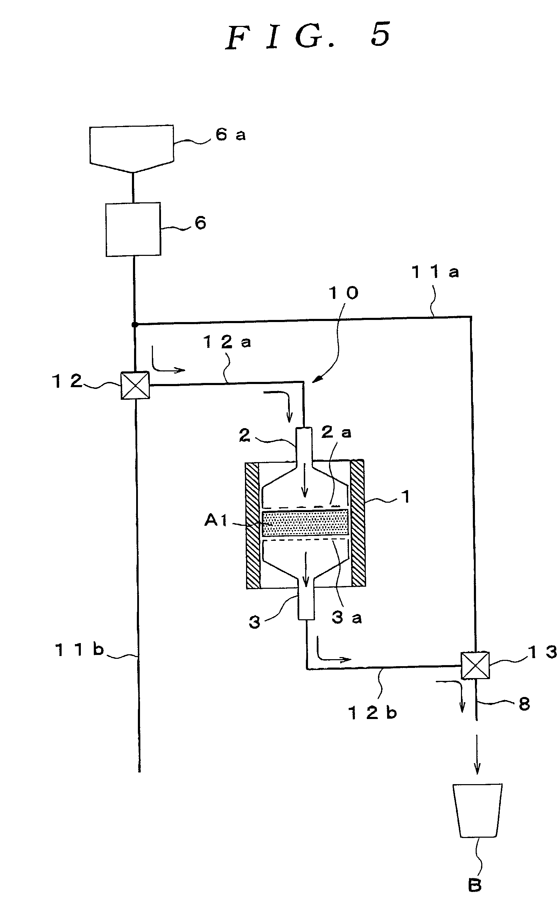

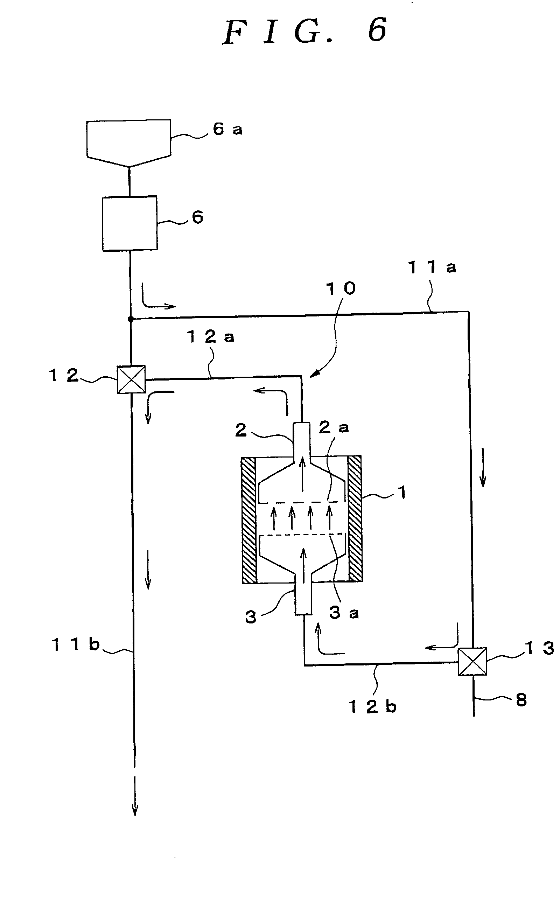

FIGS. 5 and 6 show a second embodiment of the present invention. In these drawings, same reference numerals are applied to elements which are essentially the same as those in the above-described embodiment.

A beverage extracting apparatus of this embodiment has a first flow path 10 for discharging hot water from the upper piston 2 to the lower piston 3, and a second flow path 11 for discharging hot water from the lower piston 3 to the upper piston 2.

The first flow path 10 is made up of an upstream-side pipe 10a for connecting the upper piston 2 to the pump 6 via a first three-way valve 12, and a downstream-side pipe 10b for connecting the lower piston 3 to the beverage discharge pipe 8 via a second three-way valve 13.

The second flow path 11 is made up of an upstream-side pipe 11a for connecting the lower piston 3 to the pump 6 via the second three-way valve 13, and a discharge pipe 11b connected to the upper piston 2 via the first three-way valve 12.

Also, in this embodiment, each of the flow holes 2a in the upper piston 2 is formed so as to have a larger opening (hole diameter) than each of the flow holes 3a in the lower piston 3.

The above-described beverage extracting apparatus is mounted in a vending machine provided with a function of cleaning a portion between the pistons 2 and 3, which a beverage vending machine is for selling, for example, coffee beverages. When coffee beverage is extracted, the beverage is extracted by means of the first flow path 10, and when a cleaning operation is selected, a portion between the pistons 2 and 3 is cleaned by means of the second flow path 11.

For the beverage extracting apparatus of this embodiment, when coffee beverage is extracted, the pump 6 and the upper piston 2 are connected to each other by the first three-way valve 12, and the lower piston 2 and the beverage discharge pipe 8 are connected to each other by the second three-way valve 13 (the first flow path 10). Thus, as shown in FIG. 5, hot water is discharged from the upper piston 2, and extracted beverage flows out of the lower piston 3.

When the cleaning operation is selected, the pistons 2 and 3 are inserted in a state in which a raw material is not charged in the extracting cylinder 1. The pump 6 and the lower piston 3 are connected to each other by the second three-way valve 13, and the upper piston 2 and the discharge pipe 11b are connected by the first three-way valve 12 (the second flow path 11). Thus, as shown in FIG. 6, hot water is discharged from the lower piston 3 to a portion between the pistons 2 and 3, and flows out of the upper piston 2. In this case, since the flow holes 2a in the upper piston 2 are formed so as to be larger than the flow holes 3a in the lower piston 3, even raw material grounds remaining without passing through the flow holes 3a in the lower piston 3 pass through the flow holes 2a in the upper piston 2 and are discharged to the outside through the discharge pipe 11b.

As described above, according to the beverage extracting apparatus of this embodiment, when the cleaning operation is performed, cleaning hot water is discharged from the lower piston 3 having small flow holes 3a to the upper piston 2 having large flow holes 2a. Therefore, raw material grounds remaining without passing through the flow holes 3a in the lower piston 3 can be discharged through the flow holes 2a in the upper piston 2, so that raw material grounds which cause clogging etc. can be removed surely.

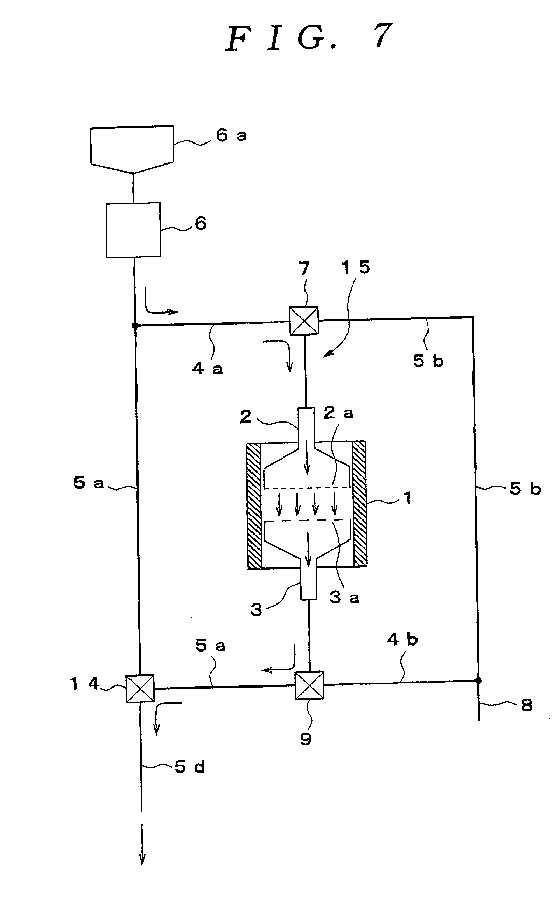

FIG. 7 shows a third embodiment of the present invention, the third embodiment being a combination of the first embodiment and the second embodiment.

In the third embodiment, in the configuration of the first embodiment, hot water is discharged from the upper piston 2 to the lower piston 3, and there is provided a third flow path 15 for the flow from the lower piston 3 to the discharge pipe 5d via a third three-way valve 14. Specifically, the third flow path 15 is switched over at the time of cleaning operation in the second embodiment. In this case, unlike the first embodiment, the flow holes 2a in the upper piston 2 are formed so as to have small flow resistance and opening, and the flow holes 3a in the lower piston 3 are formed so as to have large flow resistance and opening. Also, the first flow path 4 forms a flow path for the flow from the lower piston 3 to the upper piston 2, and the second flow path 5 forms a flow path for the flow from the upper piston 2 to the lower piston 3.

In the above-described configuration, when espresso coffee is selected, beverage is extracted by the first flow path 4, and when regular coffee is selected, the beverage is extracted by the second flow path 5.

Also, when the cleaning operation is selected, as shown in FIG. 7, hot water is discharged from the upper piston 2 to a portion between the pistons 2 and 3, and flows toward the lower piston 3. In this case, since the flow holes 3a in the lower piston 3 are formed so as to be larger than the flow holes 2a in the upper piston 2, even raw material grounds remaining without passing through the flow holes 2a in the upper piston 2 pass through the flow holes 3a in the lower piston 3 and are discharged to the outside through the discharge pipe 5d.

## Claims

1. A beverage extracting apparatus having an extracting cylinder whose upper and lower ends are open and a pair of upper and lower pistons which are inserted to the upper and lower end sides of said extracting cylinder, in which a raw material is interposed between said pistons inserted in said extracting cylinder, hot water is discharged from the end face of one piston to the raw material, and beverage extracted from the raw material is caused to flow out via the end face of the other piston,
wherein flow holes for hot water or beverage provided in the end face of each of said pistons are formed so as to have large flow resistance for one piston and have small flow resistance for the other piston, and
said beverage extracting apparatus comprises:
a first flow path for discharging hot water from one piston whose flow holes have large flow resistance to a portion between said pistons and causing the beverage to flow out of the other piston whose flow holes have small flow resistance when a predetermined kind of beverage is extracted;
a second flow path for discharging hot water from the other piston whose flow holes have small flow resistance to the portion between said pistons and causing the beverage to flow out of one piston whose flow holes have large flow resistance when another kind of beverage is extracted; and
flow path switching means for switching over said flow paths.

2. A beverage extracting apparatus having an extracting cylinder whose upper and lower ends are open and a pair of upper and lower pistons which are inserted to the upper and lower end sides of said extracting cylinder, in which a raw material is interposed between said pistons inserted in said extracting cylinder, hot water is discharged from the end face of one piston to the raw material, and beverage extracted from the raw material is caused to flow out via the end face of the other piston,
wherein flow holes for hot water or beverage provided in the end face of each of said pistons are formed so as to have a large opening for one piston and have a small opening for the other piston, and
said beverage extracting apparatus comprises:
a first flow path for discharging hot water from one piston whose flow holes have a large opening to a portion between said pistons and causing the beverage to flow out of the other piston whose flow holes have a small opening when a beverage is extracted;
a second flow path for discharging hot water from the other piston whose flow holes have a small opening to the portion between said pistons and causing the hot water to flow out of one piston whose flow holes have a large opening when the portion between said pistons is cleaned; and
flow path switching means for switching over said flow paths.

3. A beverage extracting apparatus having an extracting cylinder whose upper and lower ends are open and a pair of upper and lower pistons which are inserted to the upper and lower end sides of said extracting cylinder, in which a raw material is interposed between said pistons inserted in said extracting cylinder, hot water is discharged from the end face of one piston to the raw material, and beverage extracted from the raw material is caused to flow out via the end face of the other piston,
wherein flow holes for hot water or beverage provided in the end face of each of said pistons are formed so as to have large flow resistance and opening for one piston and have small flow resistance and opening for the other piston, and
said beverage extracting apparatus comprises:
a first flow path for discharging hot water from one piston whose flow holes have large flow resistance to a portion between said pistons and causing the beverage to flow out of the other piston whose flow holes have small flow resistance when a predetermined kind of beverage is extracted;
a second flow path for discharging hot water from the other piston whose flow holes have small flow resistance to the portion between said pistons and causing the beverage to flow out of one piston whose flow holes have large flow resistance when another kind of beverage is extracted;
a third flow path for discharging hot water from the other piston whose flow holes have a small opening to the portion between saidpistons and causing the hot water to flow out of one piston whose flow holes have a large opening when the portion between said pistons is cleaned; and
flow path switching means for switching over said flow paths.
